# EUROPÄISCHE PATENTSCHRIFT

(11) **EP 2 217 831 B1**
(45) Veröffentlichungstag und Bekanntmachung des Hinweises auf die Patenterteilung: **10.08.2011**
(21) Anmeldenummer: 08859409.8
(22) Anmeldetag: 09.12.2008
(51) Int. Cl.: F16H 7/08, F16H 7/12

(54) **MECHANISCHES FEDERELEMENT FÜR ZUGMITTELTRIEBE**
MECHANICAL SPRING ELEMENT FOR FLEXIBLE DRIVE
ELÉMENT DE SUSPENSION MÉCANIQUE POUR TRANSMISSIONS PAR LIEN SOUPLE

(30) Priorität: 10.12.2007 DE 102007059657
(43) Veröffentlichungstag der Anmeldung: 18.08.2010
(73) Patentinhaber: Schaeffler Technologies GmbH & Co. KG, 91074 Herzogenaurach (DE)
(72) Erfinder: GRAF, Herbert, 96120 Bischberg (DE); JAHNKE, Patrick, 90425 Nürnberg (DE); KAISER, Jörg, 91475 Lonnerstadt (DE); MACK, Stefan, 91054 Erlangen (DE); PROSCH, Gerhard, 91315 Höchstadt (DE); ROST, Christoph, 91443 Scheinfeld (DE)
(86) Internationale Anmeldenummer: PCT/EP2008/067093
(87) Internationale Veröffentlichungsnummer: WO 2009/074566

(56) Entgegenhaltungen:
- WO-A-03/100293
- WO-A-2004/083682
- US-A- 6 159 120

## Beschreibung

Die vorliegende Erfindung betrifft ein auch als Spannvorrichtung zu bezeichnendes Federelement, das In Zugmitteltrieben von Brennkraftmaschinen einsetzbar ist Das Federelement steht in einem Einbauzustand mittelbar oder unmittelbar, insbesondere über eine Spannrolle mit einem bevorzugt als Riemen ausgebildeten Zugmittel in einer Wirkverbindung, um eine ausreichende Vorspannung des Zugmittels zu gewährleisten. Eine Befestigung des Federelementes erfolgt jeweils über ein dem Zylinder sowie dem Kolben zugeordnetes Befestigungsauge.

Linear wirkende Spannelemente werden zur Gewährleistung einer konstanten Vorspannung von Zugmitteln, insbesondere Endlosriemen in Zugmitteltrieben wie Aggregatetrieben und/oder Steuertrieben von Brennkraftmaschinen eingesetzt.

Aus der gattungsgemäβen US 6 159 120 ist ein als Spannvorrichtung für einen Zugmitteltrieb einer Brennkraftmaschine bestimmtes Federelement bekannt. Das linear verstellbare Federelement umfasst einen Zylinder in dem ein Kolben verschiebbar geführt ist. Dem Zylinder ist endseitig ein Gehäuse mit zwei Anlenkpunkten zugeordnet, Ober die das Federelement ortsfest an der Brennkraftmaschine befestigt werden kann. Der Kolben ist einstückig mit einem Führungselement verbunden, in dem eine kraftschlüssig an einem Zugmittel abgestützte Spannrolle drehbar eingesetzt ist. Die Kolben-Zylinder-Einheit ist außenseitig von einer als Schraubenfeder ausgebildeten Druckfeder umschlossen, die über dem Gehäuse bzw. dem Führungselement zugeordnete Federteller abgestützt ist. Das bekannte Federelement umfasst keine Einrichtung, mit der eine Im Betriebszustand wirksame Hubbegrenzung realisierbar ist.

### Aufgabe der Erfindung

Der vorliegenden Erfindung liegt die Aufgabe zugrunde, eine kostengünstig herstellbare, robuste, als ein Federelement ausgeführte, gewichtsoptimierte Spannvorrichtung einschließlich einer wirksamen Hubbegrenzung zu realisieren.

Die Lösung dieser Problemstellung besteht darin, dass zur Hubbegrenzung des Federelementes ein dem Kolben zugeordneter Querstift zumindest einseitig formschlüssig in eine Längsführung des Zylinders eingreift. Dieser Aufbau gewährleistet eine wirksame Transportsicherung aller dem Federelement zugehörigen Bauteile. Andererseits bewirkt der Querstift im Einbauzustand der Spannvorrichtung bei einem Zugmittelriss eine Zerfallsicherung. Das erfindungsgemäße Federelement umfasst aus Leichtmetall oder Kunststoff hergestellte, zueinander linear verschiebbare Bauteile, insbesondere den Kolben und Zylinder, zur Realisierung einer gewichts- und bauraumoptimiert ausgeführten Spannvorrichtung. Als geeigneter Querstift zur Hubbegrenzung eignet sich bevorzugt eine in den Kolben eingebrachte Wälzkörpernadel eines handelsüblichen Nadellagers.

Der in dem Kolben eingebrachte, eine Hubbegrenzung bildende Querstift bewirkt zwischen den relativ zueinander verschiebbaren Bauteilen Kolben und Zylinder außerdem eine Lageorientierung. Der mittels einer Pressung oder einer stoffschlüssigen Verbindung lagefixiert in eine Bohrung des Kolbens eingebrachte Querstift greift zumindest einseitig formschlüssig, spielbehaftet in diametral gegenüberliegende Längsführungen des Zylinders ein. Damit kann das vollständig vormontierte erfindungsgemäße Federelement beispielsweise einem Montageprozess zugeführt werden, um ein Spannsystem für einen Zugmitteltrieb zu komplettieren. Der Querstift in Verbindung mit der Längsführung bildet außerdem eine so genannte Schnalzsicherung, die beispielsweise bei einem Riss des Zugmittels, insbesondere eines Riemens oder Zahnriemens ein unkontrolliertes Auseinandergleiten von dem Kolben und dem Zylinder verhindert.

Ein weiteres Gestaltungsmerkmal bezieht sich auf eine den Kolben oder den Zylinder teilweise außen umschließende Druckfeder, die so ausgebildet ist, dass deren Außenkontur die Kontur des weiteren, mit dem Federelement nicht umschlossenen Bauteils nicht übertrifft. Die beiden linear zueinander verschiebbaren, auch als Gehäuse zu bezeichnenden Bauteile der Kolben und der Zylinder weisen endseitig jeweils ein Befestigungsauge auf, die zur Aufnahme einer separaten Verschraubung vorgesehen sind, über die das Federelement beispielsweise einerseits an einem Gehäuse der Brennkraftmaschine und andererseits an einem Schwenkhebel angelenkt ist, der endseitig eine am Zugmittel abgestützt Spannrolle umfasst. Als Federmittel eignet sich bevorzugt eine Schrauben-Druckfeder, die beispielsweise kolbenseitig an einem Bund und zylinderseitig an einer Stufe abgestützt ist. Die kompakte Bauweise des erfindungsgemäßen Federelementes unterstreichend, übertrifft das zwischen dem Kolben und dem Zylinder eingesetzte Federmittel weder die Außenkontur des Kolbens noch die des Zylinders. Vorteilhaft kann dabei außerdem eine gegen Verschmutzung und Eintritt von Feuchtigkeit bzw. Flüssigkeit geschützte Führung des Kolbens in dem Zylinder beispielsweise in Verbindung mit einem elastischen Balg realisiert werden.

Als Maßnahme zur Reibungs- und Verschleißminderung ist der Kolben über eine Hülse an der Innenwandung des Zylinders geführt. Die geschlossen oder geschlitzt ausgeführte, eine Gleitlagerbuchse bildende Hülse kann formschlüssig und / oder kraftschlüssig an dem Kolben befestigt werden.

Für ein Federelement, bei dem das Federmittel sich nahezu über die gesamte Länge des Zylinders bzw. des Kolbens erstreckt, bietet es sich an, in einem radial von dem Federmittel und der Zylinderaußenwand begrenzten Ringspalt eine Mantelhülse einzubringen. Innenseitig bildet die Hülse eine Begrenzung für den im Kolben eingebrachten, in die Längsführung des Zylinders ragenden Querstift.

Als bevorzugter Werkstoff für die Hülse des Kolbens und die dem Zylinder zugeordnete Mantelhülse eignet sich Polyamid, insbesondere PA 66 H. Weiterhin ist erfindungsgemäß auch für den Zylinder und den Kolben ein Kunststoff als Werkstoff vorgesehen, insbesondere PA 66 mit einem Glasfaseranteil ≥ 35%.

Für das erfindungsgemäße Federelement bietet es sich außerdem an, dass diese Vorrichtung mittels eines separaten Haltebügels zusammengepresst und / oder in einer zusammengepressten Transportposition gehalten werden kann.

Als Maßnahme zur weiteren Gewichtsreduzierung können der Kolben und der Zylinder zumindest im Bereich der verschiebbaren Zone erfindungsgemäß als Hohlkörper bzw. als Rohrkörper gestaltet werden. Weiterhin bietet es sich an, das Federelement aus unterschiedlichen Werkstoffen herzustellen. Beispielsweise kann der Kolben als Blechkörper dargestellt werden, der mit einem Kunststoffzylinder zusammenwirkt. Außerdem kann der in einem Kunststoffgehäuse linear verschiebbare Bereich des Kunststoffzylinders bereichsweise außenseitig mit einem Blechmantel umschlossen werden.

Weiterhin ist vorgesehen, das Federelement in einer Endstellung zu positionieren bzw. in dieser Lage zu sichern. Dazu eignet sich bevorzugt ein separater Federstecker, der den Querstift des Kolbens gegenüber dem als Zylinder ausgebildeten Gehäuse in einer Endlage positioniert, bei der ein Bauteil des Federelementes zusammengepresst an einem Anschlag abgestützt gesichert sind. Damit kann das Federelement in einer vorgespannten Lage bauraumoptimiert angeliefert oder transportiert werden, was außerdem die Montage vereinfacht.

### Figurenbeschreibung

Ausführungsbeispiele der Erfindung werden nachfolgend beschrieben, wobei sich die Erfindung nicht auf diese Ausführungsbeispiele beschränkt.

Es zeigen:
- Figur 1: ein erfindungsgemäßes Federelement in einem Längsschnitt, bei dem ein als Führungshülse gestalteter Kolben in einem Zylinder verschiebbar geführt ist;
- Figur 2: ein alternativ zu Figur 1 aufgebautes Federelement, mit einem ein Kunststoffelement bildenden Kolben, der bereichsweise von einer Hülse umschlossen ist;
- Figur 3: das Federelement in einer um 90° zu Figur 2 versetzten Schnitt- darstellung;
- Figur 4: das mittels eines Querstiftes in einer Endstellung fixierte Feder- element gemäß Figur 2;
- Figur 5: das Federelement gemäß Figur 5 in einer um 90° versetzt darge- stellten Schnittdarstellung;
- Figur 6: das in einer zusammengepressten Stellung gemäß Figur 4 dar- gestellte Federelement in einer Perspektive.

### Detaillierte Beschreibung der Zeichnungen

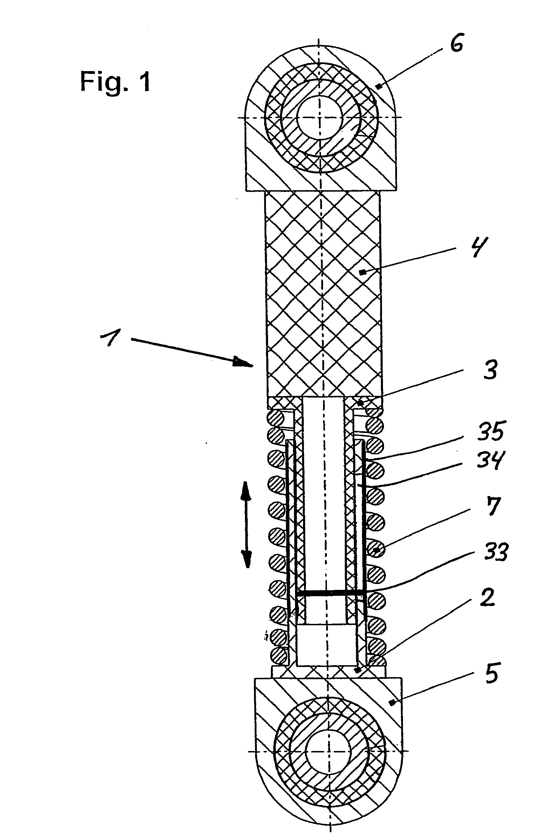

Die Figur 1 zeigt einen Aufbau eines Federelementes 1, bestehend aus einem eine Führungshülse bildenden Zylinder 2, in dem ein rohrförmiger Kolben 3 verschiebbar geführt ist. Der Kolben 3 ist bevorzugt mit einem aus Kunststoff hergestellten Distanzstück 4 auf der vom Zylinder 2 abgewandten Seite verlängert. Dem Zylinder 2 bzw. dem Distanzstück 4 ist jeweils ein Befestigungsauge 5, 6 zugeordnet, mit denen das Federelement 1 beispielsweise einerseits ortsfest, aber gleichzeitig schwenkbar an einem Gehäuse einer Brennkraftmaschine verbunden oder einem in Figur 1 nicht abgebildeten Schwenkhebel zugeordnet ist, der mittelbar mit einer Spannrolle verbunden, das Zugmittel beaufschlagt. Ein Federmittel 7, eingesetzt zwischen dem Zylinder 2 und dem Kolben 3 übt eine Spreizkraft aus, die auf die Spannrolle übertragen stets eine ausreichende Vorspannung des Zugmittels gewährleistet. Die bauliche Auslegung des Federmittels 7 ist einer Mantelstruktur des Distanzstücks 4 angepasst. Entsprechend ist der Außendurchmesser des Federelements gleich oder kleiner dem des Distanzstücks 4. Zur Darstellung einer Hubbegrenzung ist in dem Kolben 3 ein aus der Außenkontur des Kolbens 3 austretender Querstift 33 eingesetzt, der spielbehaftet in eine Längsführung 34 des Zylinders 2 eingreift und damit gleichzeitig eine Lageorientierung dieser Bauteile bewirkt. Zur Vermeidung eines Kontaktes mit dem Federmittel 7 ist der Zylinder 2 von einer Mantelhülse 35 umschlossen, die eine Radialbegrenzung für den Querstift 33 bildet.

Alternativ zu dem den Zylinder 2 außen umschließenden Federelement 7 bietet es sich an, das Federmittel 7 innerhalb des als Hülse ausgebildeten Kolbens 3 anzuordnen. Dazu ist weist der Kolben 3 bevorzugt einen vergrößerten Innendurchmesser auf sowie einen daran angepassten Zylinder 2.

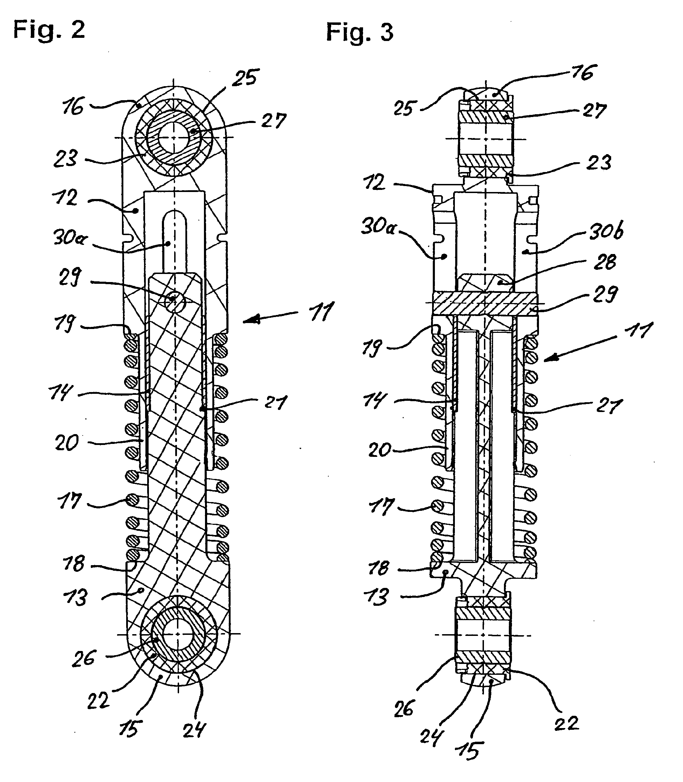

Das Federelement 11 gemäß Figur 2 umfasst einen Zylinder 12, dem ein Kolben 13 zugeordnet ist, die übereinstimmend aus Kunststoff hergestellt sind, wobei der Kolben 13 über eine längenbegrenzte metallische Hülse 14 verfügt, über die der Kolben 13 an einer Innenwand des Zylinders 12 geführt ist. Der Zylinder 12 sowie der Kolben 13 sind einstückig jeweils mit einem Befestigungsauge 15, 16 verbunden, die übereinstimmend einen Lagerring 22, 23 umfassen, der in einem sich bildenden Ringspalt zwischen einer Aufnahme 24, 25 sowie einer zentralen Buchse 26, 27 eingesetzt ist. Zur Ausübung einer Spreizkraft dient das Federmittel 17, welches einerseits an einem Bund 18 des Befestigungsauges 15 und andererseits an einer Stufe 19 des Zylinders 12 abgestützt ist. Von der Stufe 19 ausgehend bildet der Zylinder 12 einen durchmesserreduzierten Abschnitt 20, welcher außenseitig von dem Federmittel 17 umschlossen ist und weiterhin endseitig eine Dichtung 21 einschließt, die einen sich einstellenden Dichtspalt zwischen dem Kolben 13 und dem Zylinder 12 abdichtet.

Die Figur 3 zeigt das Federelement 11 in einem zu der Figur 2 um 90° versetzten Längsschnitt. Danach weist der Kolben 13 vom Bund 18 des Befestigungauges 15 ausgehend ein Flachprofil auf, welches endseitig einen zylindrischen Abschnitt 28 bildet. Der Abschnitt 28 wird außenseitig von der Hülse 14 umschlossen und dient weiterhin zur Aufnahme eines im Abschnitt 28 fixierten Querstiftes 29. Der beidseitig axial verlängerte Querstift 29 greift formschlüssig spielbehaftet in Längsführungen 30a, 30b des Zylinders 12 ein und bildet damit eine Hubbegrenzung und gleichzeitig eine Verliersicherung, wodurch alle Bauteile des Federelementes 11 verliergesichert zusammengefasst sind.

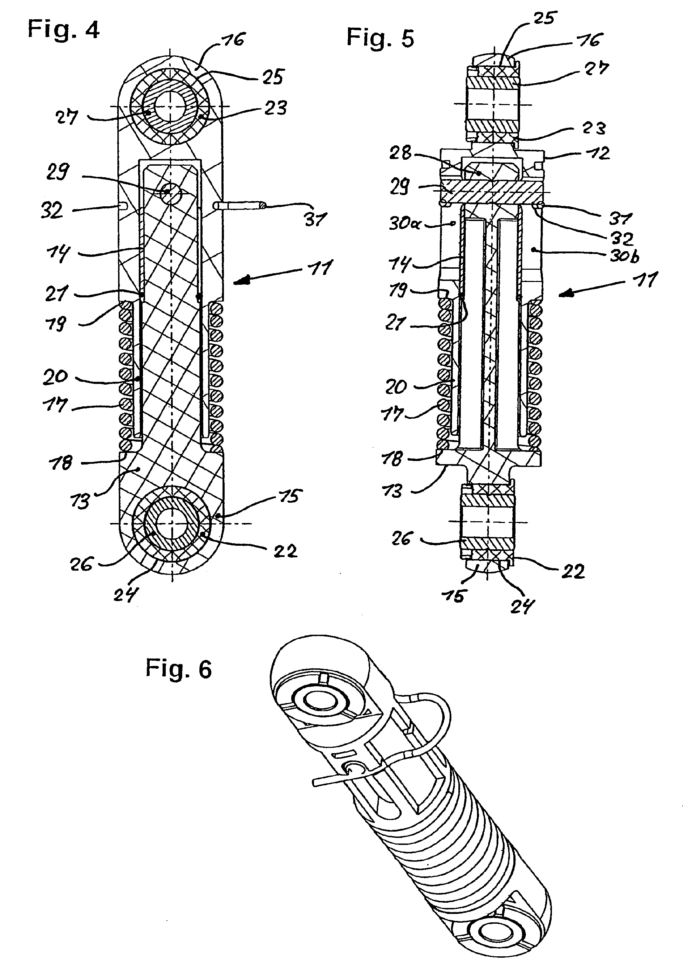

Die Figuren 4, 5 und 6 zeigen das Federelement 11 in einer vorgespannten Stellung. Dazu ist ein spangenartig gestalteter Federstecker 31 vorgesehen, mit dem der Kolben 13 in einer Endlage gegenüber dem Zylinder 12 positioniert ist. Der Zylinder 12 schließt zur formschlüssigen Aufnahme des Federsteckers 31 eine Ringnut 31 ein. In der vorgespannten Lage des Federelementes 2 und dem eingesetzten Federstecker 31 ist der Querstift 29 im Bereich der Längsführung 30a, 30b bereichsweise an dem Federstecker 31 abgestützt.

### Bezugszahlenliste

- 1: Federelement
- 2: Zylinder
- 3: Kolben
- 4: Distanzstück
- 5: Befestigungsauge
- 6: Befestigungsauge
- 7: Federmittel
- 11: Federelement
- 12: Zylinder
- 13: Kolben
- 14: Hülse
- 15: Befestigungsauge
- 16: Befestigungsauge
- 17: Federmittel
- 18: Bund
- 19: Stufen
- 20: Abschnitt
- 21: Dichtung
- 22: Lagerring
- 23: Lagerring
- 24: Aufnahme
- 25: Aufnahme
- 26: Buchse
- 27: Buchse
- 28: Abschnitt
- 29: Querstift
- 30a: Längsführung
- 30b: Längsführung
- 31: Federstecker
- 32: Ringnut
- 33: Querstift
- 34: Längsführung
- 35: Mantelhülse

## Patentansprüche

1. Federelement (1, 11), eingesetzt in einem Zugmitteltrieb einer Brennkraftmaschine, bestehend aus einem Zylinder (2, 12), in dem ein Kolben (3, 13) linear verschiebbar geführt und von einem Federmittel (7, 17) kraftbeaufschlagt ist, wobei zur Befestigung des Federelementes (1, 11) der Zylinder (2, 12) sowie der Kolben (3, 13) übereinstimmend jeweils ein Befestigungsauge (5, 15; 6, 16) aufweisen, **dadurch gekennzeichnet, dass** zur Hubbegrenzung des Federmittels (1,11) ein dem Kolben (3,13) zugeordneter Querstift (29, 33) formschlüssig in eine Längsführung (30a, 30b; 34) des Zylinders (2,12) eingreift.

2. Federelement nach Anspruch 1, **dadurch gekennzeichnet, dass** eine Wälzkörpernadel eines handelsüblichen Nadellagers als Querstift (29, 33) zur Hubbegrenzung in dem Kolben (3, 13) eingebracht ist.

3. Federelement nach Anspruch 1, **dadurch gekennzeichnet, dass** als Federmittel (7, 17) eine Schrauben-Druckfeder vorgesehen ist, die kolbenseitig an einem Bund (18) und zylinderseitig an einer Stufe (19) abgestützt ist.

4. Federelement nach Anspruch 1, **dadurch gekennzeichnet, dass** das zwischen dem Kolben (3, 13) und dem Zylinder (2, 12) eingesetzte Federmittel (7, 17) eine Außenkontur von dem Kolben (3, 13) und dem Zylinder (2,12) nicht übertrifft.

5. Federelement nach Anspruch 1, **dadurch gekennzeichnet, dass** der Kolben (13) über eine Hülse (14) in dem Zylinder (12) geführt ist.

6. Federelement nach Anspruch 5, **dadurch gekennzeichnet, dass** die geschlossen oder geschlitzt ausgeführte, eine Gleitlagerbuchse bildende Hülse (14) formschlüssig und/oder kraftschlüssig an dem Kolben (13) befestigt ist.

7. Federelement nach Anspruch 1, **dadurch gekennzeichnet, dass** der Zylinder (3) eine Mantelhülse (35) umfasst, die außenseitig von dem Federmittel (7) umschlossen ist.

8. Federelement nach Anspruch 5, **dadurch gekennzeichnet, dass** die Hülse (14, 5) aus Polyamid wie PA 66 H hergestellt ist.

9. Federelement nach Anspruch 1, **dadurch gekennzeichnet, dass** die Bauteile Zylinder (2, 12) und Kolben (3, 13) aus Kunststoff hergestellt sind.

10. Federelement nach Anspruch 8, **dadurch gekennzeichnet, dass** PA 66 mit einem Glasfaseranteil ≥ 35% als Werkstoff für die Bauteile Kolben (3, 13) und Zylinder (2, 12) vorgesehen ist.

11. Federelement nach Anspruch 1, **dadurch gekennzeichnet, dass** mittels einer separaten Vorrichtung oder eines separaten Haltebügels das Federelement (1,11) zusammengepresst und/oder in einer zusammengepressten Position gehalten werden kann.

## Claims

1. Spring element (1, 11), used in a flexible drive of an internal combustion engine and comprising a cylinder (2, 12) in which a piston (3, 13) is guided in a linearly displaceable manner and has a force applied thereto by a spring means (7, 17), wherein, to fasten the spring element (1, 11), the cylinder (2, 12) and the piston (3, 13) correspondingly each have a fastening eye (5, 15; 6, 16), **characterized in that**, to limit the travel of the spring means (1, 11), a transverse pin (29, 33) which is assigned to the piston (3, 13) engages in a form-fitting manner in a longitudinal guide (30a, 30b; 34) of the cylinder (2, 12).

2. Spring element according to Claim 1, **characterized in that** a rolling body needle of a commercially available needle roller bearing is fitted in the piston (3, 13) as the transverse pin (29, 33) to limit the travel.

3. Spring element according to Claim 1, **characterized in that** a helical compression spring which is supported on the piston side on a collar (18) and on the cylinder side on a step (19) is provided as the spring means (7, 17).

4. Spring element according to Claim 1, **characterized in that** the spring means (7, 17) which is inserted between the piston (3, 13) and the cylinder (2, 12) does not exceed an external contour of the piston (3, 13) and the cylinder (2, 12).

5. Spring element according to Claim 1, **characterized in that** the piston (13) is guided in the cylinder (12) via a sleeve (14).

6. Spring element according to Claim 5, **characterized in that** the sleeve (14) which is of closed or slotted design and forms a sliding bearing bush is fastened to the piston (13) in a form-fitting and/or frictional manner.

7. Spring element according to Claim 1, **characterized in that** the cylinder (3) comprises a sheath-type sleeve (35) which is enclosed on the outer side by the spring means (7).

8. Spring element according to Claim 5, **characterized in that** the sleeve (14, 5) is produced from polyamide, such as PA 66 H.

9. Spring element according to Claim 1, **characterized in that** the cylinder (2, 12) and piston (3, 13) components are produced from plastic.

10. Spring element according to Claim 8, **characterized in that** PA 66 having a glass fiber content ≥ 35% is provided as the material for the piston (3, 13) and cylinder (2, 12) components.

11. Spring element according to Claim 1, **characterized in that** the spring element (1, 11) can be compressed and/or held in a compressed position by means of a separate device or a separate holding clip.

## Revendications

1. Elément de ressort (1, 11), utilisé dans un entraînement à moyen de traction d'un moteur à combustion interne, constitué d'un cylindre (2, 12), dans lequel un piston (3, 13) est guidé de manière déplaçable linéairement et est sollicité par force par un moyen de ressort (7, 17), le cylindre (2, 12) ainsi que le piston (3, 13) présentant, pour la fixation de l'élément de ressort (1, 11), à chaque fois un oeillet de fixation (5, 15 ; 6, 16) en coïncidence, **caractérisé en ce que** pour la limitation de course du moyen de ressort (1, 11), une goupille transversale (29, 33) associée au piston (3, 13) vient en prise par engagement positif dans un guide longitudinal (30a, 30b ; 34) du cylindre (2, 12).

2. Elément de ressort selon la revendication 1, **caractérisé en ce qu'**une aiguille de corps de roulement d'un palier à aiguille courant dans le commerce est réalisée sous forme de goupille transversale (29, 33) pour la limitation de course dans le piston (3, 13).

3. Elément de ressort selon la revendication 1, **caractérisé en ce que** l'on prévoit comme moyen de ressort (7, 17) un ressort de compression à boudin qui est supporté du côté du piston contre un épaulement (18) et du côté du cylindre contre un étage (19).

4. Elément de ressort selon la revendication 1, **caractérisé en ce que** le moyen de ressort (7, 17) inséré entre le piston (3, 13) et le cylindre (2, 12) ne dépasse pas un contour extérieur du piston (3, 13) et du cylindre (2, 12).

5. Elément de ressort selon la revendication 1, **caractérisé en ce que** le piston (13) est guidé par le biais d'une douille (14) dans le cylindre (12).

6. Elément de ressort selon la revendication 5, **caractérisé en ce que** la douille (14) fermée ou fendue, formant une douille de palier lisse, est fixée par engagement positif et/ou par engagement par force sur le piston (13).

7. Elément de ressort selon la revendication 1, **caractérisé en ce que** le cylindre (3) comprend une douille d'enveloppe (35) qui est entourée du côté extérieur par le moyen de ressort (7).

8. Elément de ressort selon la revendication 5, **caractérisé en ce que** la douille (14, 5) est fabriquée en polyamide tel que du PA 66 H.

9. Elément de ressort selon la revendication 1, **caractérisé en ce que** les composants cylindre (2, 12) et piston (3, 13) sont fabriqués en plastique.

10. Elément de ressort selon la revendication 8, **caractérisé en ce que** du PA 66 est prévu avec une proportion de fibres de verre ≥ 35% en tant que matériau pour les composants piston (3, 13) et cylindre (2, 12).

11. Elément de ressort selon la revendication 1, **caractérisé en ce que** l'élément de ressort (1, 11) peut être comprimé et/ou maintenu dans une position comprimée au moyen d'un dispositif séparé ou d'un étrier de fixation séparé.
